# EUROPEAN PATENT SPECIFICATION

(11) **EP 1 597 874 B1**
(45) Date of publication and mention of the grant of the patent: **05.08.2009**
(21) Application number: 03779361.9
(22) Date of filing: 27.10.2003
(51) Int. Cl.: H04L 12/56

(54) **SYSTEM, METHOD AND DEVICE FOR AUTONEGOTIATION**
SYSTEM, VERFAHREN UND GERÄT ZUR AUTOUNTERHANDLUNG
SYSTEME, PROCEDE ET DISPOSITIF D'AUTONEGOCIATION

(30) Priority: 07.11.2002 US 291017
(43) Date of publication of application: 23.11.2005
(73) Proprietor: Intel Corporation, Santa Clara, CA 95052 (US)
(72) Inventor: BOOTH, Bradley, Austin, TX 78735 (US)
(74) Representative: Dunlop, Hugh Christopher
(86) International application number: PCT/US2003/034160
(87) International publication number: WO 2004/045181

(56) References cited:
- WO-A-01/47184
- US-A1- 2001 009 553
- US-B1- 6 359 893

## Description

### BACKGROUND

### Field:

The subject matter disclosed herein relates to interfaces between devices. In particular, the subject matter disclosed herein relates to devices capable of transmitting or receiving data in one or more data transmission mode.

### Information:

Data transmitted in a transmission medium between devices is typically transmitted according to a data link protocol that depends on the particular transmission medium. For a particular transmission medium, devices may transmit or receive data according to more than one data transmission mode. Also, particular devices are capable of transmitting data in a transmission medium according to more than one data transmission mode. Devices coupled by a transmission medium may engage in an "autonegotiation" procedure whereby the devices agree on a common data transmission mode to be used in transmitting data between the devices.

US 6,359,893 discusses a multi-communication rate switching physical device for a part of a mixed communication rate Ethernet repeater network. US 2001/0009553 discusses a dual speed end station which routhely checks its current connection through first and second different speed transceivers and gives priority of communication through the higher speed transceiver.

**BRIEF DESCRIPTION OF THE FIGURES**

Non-limiting and non-exhaustive embodiments of the present invention will be described with reference to the following figures, wherein like reference numerals refer to like parts throughout the various figures unless otherwise specified.

Figure 1 shows a diagram illustrating a system capable of negotiating a data transmission mode between devices according to an embodiment of the present invention.

Figure 2 shows a flow diagram illustrating a process of negotiating a data transmission mode in data lanes of a device-to-device interconnection (DDI) using link pulses according to an embodiment of the system shown in Figures 1.

Figures 3 through 5 show schematic diagrams illustrating devices capable of negotiating a mode of data transmission in data lanes of a DDI according to alternative embodiments of the present invention shown in Figures 1 and 2.

Figure 6 shows a schematic diagram of devices capable of encapsulated autonegotiation of an operational mode following negotiation of a data transmission mode in a DDI using a link pulse signal.

**DETAILED DESCRIPTION**

Reference throughout this specification to "one embodiment" or "an embodiment" means that a particular feature, structure, or characteristic described in connection with the embodiment is included in at least one embodiment of the present invention. Thus, the appearances of the phrase "in one embodiment" or "an embodiment" in various places throughout this specification are not necessarily all referring to the same embodiment. Furthermore, the particular features, structures, or characteristics may be combined in one or more embodiments.

"Machine-readable" instructions as referred to herein relates to expressions which may be understood by one or more machines for performing one or more logical operations. For example, machine-readable instructions may comprise instructions which are interpretable by a processor compiler for executing one or more operations on one or more data objects. However, this is merely an example of machine-readable instructions and embodiments of the present invention are not limited in this respect.

"Machine-readable medium" as referred to herein relates to media capable of maintaining expressions which are perceivable by one or more machines. For example, a machine readable medium may comprise one or more storage devices for storing machine-readable instructions or data. Such storage devices may comprise storage media such as, for example, optical, magnetic or semiconductor storage media. However, this is merely an example of a machine-readable medium and embodiments of the present invention are not limited in this respect.

"Logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and embodiments of the present invention are not limited in this respect.

A "device-to-device interconnection" (DDI) as referred to herein relates to a data link to transmit data between devices coupled to a common circuit board. For example, a DDI may be formed by conductive traces formed on a circuit board between device sockets to receive devices. However, this is merely an example of a DDI and embodiments of the present invention are not limited in this respect.

A data link formed in a DDI may comprise a plurality of "data lanes" where each data lane transmits data from a source to a destination independently of other data lanes. Each data lane in a data link may transmit symbols in a transmission medium which are decoded into data bits at a destination. However, this is merely an example of data lanes that may be used to transmit data in a DDI and embodiments of the present invention are not limited in these respects.

A "link pulse signal" as referred to herein relates to a signal transmitted on a data link between devices comprising a series of signaling pulses. A link pulse signal may transmit information which is encoded in pulses transmitted at uniform intervals. For example, a "fast link pulse signal" may comprise alternating clock and data pulse signals transmitted at a pulse repetition frequency. However, these are merely examples of a link pulse signal and embodiments of the present invention are not limited in these respects.

A "data transceiver" as referred to herein relates to a device that is capable of transmitting data to and receiving data from a transmission medium. For example, a data transceiver may comprise circuitry or logic for attaching the data transceiver to a transmission medium, encoding signals for transmission on the transmission medium and decoding signal received from the transmission medium. However, this is merely an example of a data transceiver and embodiments of the present invention are not limited in this respect.

A data transceiver may be capable of transmitting or receiving data in one or more "data transmission modes" relating to format by which data may be transmitted in a transmission medium. For example, a data transmission mode may be characterized by one or more of an encoding format, link speed or data rate, and data lane numbering (e.g., for transmitting and receiving data in a multi data lane data link). However, these are merely examples of how a data transmission mode may be characterized and embodiments of the present invention are not limit in these respects.

A "physical medium attachment" (PMA) section as referred to herein relates to circuitry or logic adapted to be coupled to a transmission medium for transmitting and receiving data according to a data transmission mode. For example, a PMA section may comprise circuitry or logic to perform collision detection, clock and data recovery, and/or alignment of skewed data lanes. However, these are merely examples of tasks that may be performed by a PMA section and embodiments of the present invention are not limited in these respects.

A "physical coding sublayer" (PCS) section as referred to herein relates to circuitry or logic to encode data to be transmitted in a transmission medium, or decode data received from a data transmission medium. For example, a PCS section may be adapted to decode data recovered from a PMA section according to a data transmission mode. Also, a PCS section may encode data to be transmitted by a PMA according to a data transmission mode. However, these are merely examples of a PCS section and embodiments of the present invention are not limited in these respects.

A "negotiation period" as referred to herein relates to a period during which a data transmission mode may be selected for transmitting data on a data link. During a negotiation period, for example, data transceivers coupled to a data link may exchange information identifying data transmission capabilities. Based upon the exchanged information, the data transceivers may select a common data transmission mode to be used in transmitting data between the devices following the negotiation period. However, this is merely an example of a negotiation period and embodiments of the present invention are not limited in this respect.

Briefly, an embodiment of the present invention relates to a method and device for negotiating a data transmission mode over a DDI. A data transceiver circuit may be coupled to one or more data lanes of the DDI. In response to one or more link pulse signals on the DDI during a negotiation period, the data transceiver may be selectively configured to transmit and receive data on one or more data lanes according to a data transmission mode based upon the received one or more link pulse signals. However, this is merely an example embodiment and other embodiments of the present invention are not limited in these respects.

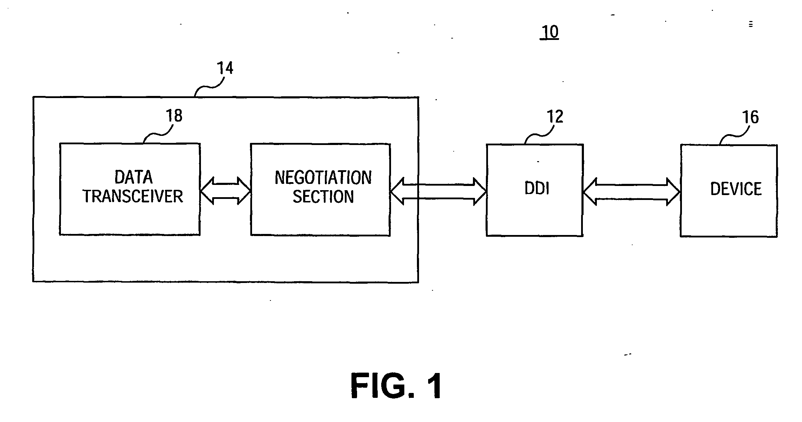

Figure 1 shows a diagram illustrating a system 10 capable of negotiating a data transmission mode according to an embodiment of the present invention. Devices 14 and 16 coupled by a DDI 12 may be configured to communicate in one or more data transmission modes. During a negotiation period, devices 14 and 16 may communicate to determine one or more possible common data transmission modes to be used in transmitting data between the devices 14 and 16. A common data transmission mode may then be selected and the devices 14 and 16 may be configured to transmit or receive data according to the selected data transmission mode.

According to an embodiment, the DDI 12 may comprise a plurality of data lanes (not shown) formed in copper traces of a printed circuit board (not shown). However, this ifs merely an example of how data lanes may be formed in a DDI and embodiments of the present invention are not limited in this respect. Each data lane may transmit or receive data in one or more differential signaling pairs. However, this is merely an example of how data may be transmitted in a data lane and embodiments of the present invention are not limited in this respect.

For full-duplex communication, a data lane may comprise two differential signaling pairs (e.g., one differential signaling pair for transmitting data from a device and one differential signaling pair for receiving data at the device). Alternatively, a data lane may comprise a single differential signaling pair for communicating in a half-duplex operating mode. However, this is merely an example of how full or half duplex communication may be implemented using differential signaling pairs and embodiments of the present invention are not limited in these respects.

According to an embodiment, the device comprises a data transceiver 18 and a negotiation section 20. The data transceiver 18 may comprise a physical media dependent (PMD) interface, circuitry or logic to transmit or receive data through data lanes in the DDI 12 such as, for example, couplings to differential pair conductors formed in the DDI 12. Coupled to the PMD circuitry, the data transceiver 18 may also comprise a PMA section and PCS section as provided in IEEE Std. 802.3ae-2002, clause 48 or IEEE Std. 802.3-2000, clause 36. However, these are merely examples of how a data transceiver may implement PMA and PCS sections and embodiments of the present invention are not limited in these respects.

According to an embodiment, the data transceiver 18 may be coupled to other devices in any one of several data communication systems or input/output architectures. For examples, a PCS of the data transceiver 18 may comprise a media independent interface (MII) for coupling to other devices such as a media access controller (MAC). Such a MAC may be couple the data transceiver 18 to any one of several other I/O devices such as, for example, a multiplexed data bus or a multi-port switch fabric. The MAC may also couple the data transceiver 18 to one or more packet classification devices (e.g., for network protocol processing) such as a network processor or packet classification ASIC. However, these are merely examples of devices that may be coupled to a data transceiver through a MAC and embodiments of the present invention are not limited in these respects.

In another embodiment, a PCS of the data transceiver 18 may comprise an MII coupled to a physical layer communication device for transmitting and receive data in a transmission medium such as, for example, coaxial, fiber optic or twisted wire pair cabling. However, these are merely examples of data transmission media that may be used for transmitting data from or receiving data at a MII and embodiments of the present invention are not limited in these respects.

According to an embodiment, the data transceiver 18 may be configured to transmit data to or receive data from the DDI 12 according to one or more data transmission modes. For each of such data transmission modes, the data transceiver 18 may comprise an associated PMA section and/or PCS section capable of transmitting or receiving data according to the data transmission mode. Accordingly, the data transceiver may comprise a plurality of PMA and/or PCS sections and logic to selectively enable a PMA section and/or PCS section based upon a selected data transmission mode.

A negotiation section 20 communicates with the device 16 to determine the capability of the device 16 in transmitting or receiving data in the DDI 12 according to one or more data transmission modes. The negotiation section 20 may then select a data transmission mode which is common among the capabilities of the data transceiver 18 and the device 16. The negotiation section may then configure the data transceiver 18 to transmit or receive data through the DDI 12 according to the selected data transmission mode, and couple the data transceiver 18 to the device 16 through the DDI 12.

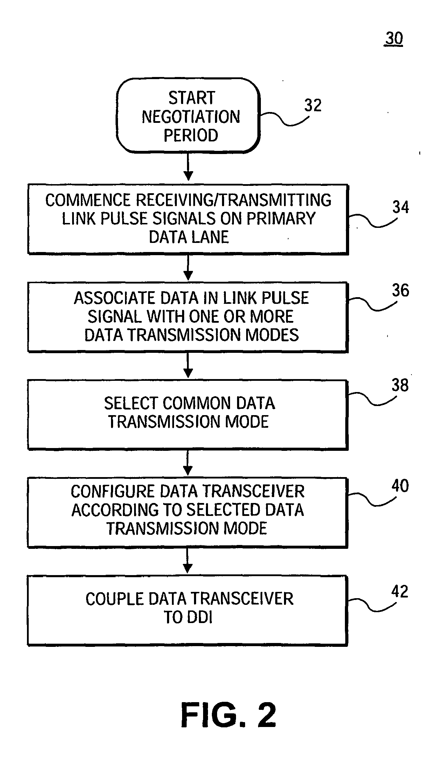

Figure 2 shows a flow diagram illustrating a process 30 of negotiating a data transmission mode in one or more data lanes of a DDI using link pulse signals according to an embodiment of the negotiation section 20 shown in Figure 1. The process 30 may be implemented in logic using techniques known to those of ordinary skill in the art of digital logic and circuit design. At bubble 32, a negotiation period may commence in response to an event such as, for example, a link restart or power up. However, these are merely examples of events that may initiate a negotiation process between devices coupled by a data link and embodiments of the present invention are not limited in these respects.

According to an embodiment, the devices 14 and 16 may transmit and receive link pulse signals transmitted on differential signaling pairs in the DDI 12. For example, the negotiation section 20 of the device 14 may transmit and receive link pulse signals as described in IEEE Std. 802.3 - 2000, clauses 28.2.1.1 and 28.2.2.1. While IEEE Std. 802.3 - 2000 clauses 28.2.1.1 and 28.2.2.1 refer to signaling over a twisted pair cable medium, the teachings of IEEE Std. 802.3 - 2000, clauses 28.2.1.1 and 28.2.2.1 may be applied to transmitting and receiving link pulse signals (including normal link pulse (NLP) signals or fast link pulse (FLP) signals) over differential signaling pairs formed in a DDI (e.g., differential signaling pairs by copper traces in a printed circuit board) without substantial modification.

It should be understood that either the device 14 or 16 may be capable of transmitting data in either one or more than one data lane in the DDI 12. At block 34, according to an embodiment, link pulse signals transmitted between the device 14 and device the device 16 may be transmitted in a predetermined "primary" data lane in the DDI 12. For example, the devices 14 and 16 may each be coupled to a transmit differential signaling pair and a receive differential signaling pair in the primary data lane. Accordingly, the devices 14 and 16 may exchange link pulse signals over the primary data lane independently of whether either device 14 or 16 is capable of transmitting data over one or more than one data lane.

The devices 14 and 16 may exchange messages encapsulated in the link pulse signals such as a Base Link Code Word as provided in IEEE Std. 802.3, clause 28.2.1.2 followed by one or more Next Page Messages as provided in IEEE Std. 802.3, clause 28.2.3.4. Among other things, the Base Link Code Word and Next Page Messages may indicate capabilities of a transmitting device to operate in one or more data transmission modes to a recipient device. In response to receipt of the encapsulated messages from device 16, at block 36 the negotiation section 20 may associate the capabilities of the device 16 with the capabilities of the data transceiver 18 to identify one or more common data transmission modes (i.e., data transmission modes which may be used by both devices 16 and 18 to transmit data between one another in the DDI 12) as provided in IEEE Std. 802.3 - 2000, clause 28.2.3.

At block 38, the negotiation section 20 may select from among more than one common data transmission mode. For example, the negotiation section 20 may arbitrate among multiple common data transmission modes to select a "highest common denominator" according to an a priori priority scheme as provided in IEEE Std. 802.3 - 2000, clause 28.2.3.

At block 40, the negotiation section 20 may configure the data transceiver 18 to transmit and/or receive data over the DDI 12 using the selected common data transmission mode (e.g., a highest common denominator data transmission mode). For example, the negotiation section 20 may comprise a Technology-Dependent Interface (TDI) with a PMA section and/or PCS section of the data transceiver 18 associated with the selected data transmission mode according to IEEE Std. 802.3 - 2000, clause 28.2.6. The negotiation section 20 may communicate with the PMA section and/or PCS section of the selected data transmission mode over the TDI to enable the PMA section and/or PCS section. However, this is merely an example of how a data transceiver may be configured to transmit or receive data according to a data transmission mode and embodiments of the present invention are not limited in these respects.

Following configuration of the data transceiver 18 according to the selected data transmission mode, at block 42 the data transceiver 18 may be coupled to the DDI 12 to communicate with the device 16 according to a Transmit Switch Function as provided in IEEE Std. 802.3 - 2000, clause 28.2.1.3 (e.g., coupling one or more transmitting differential pairs) and a Receive Switch Function IEEE Std. 802.3 - 2000, clause 28.2.2.3 (e.g., coupling one or more receiving differential pairs). However, this is merely an example of how a data transceiver may be coupled to a transmission medium following configuration of a data transmission mode and embodiments of the present invention are not limited in these respects.

While Figures 1 and 2 refer to a data transceiver 18 and negotiation section 20 in device 14, it should be understood that the device 16 may similarly comprise a data transceiver (not shown) which is capable of communicating in the DDI 12 according to one or more data transmission modes. The device 16 may also comprise a negotiation section (not shown) to communicate with the negotiation section 20 for selecting a common data transmission mode (and configuring the data transceiver to transmit and receive data according to the common data transmission mode) by executing the process 30 shown in Figure 2.

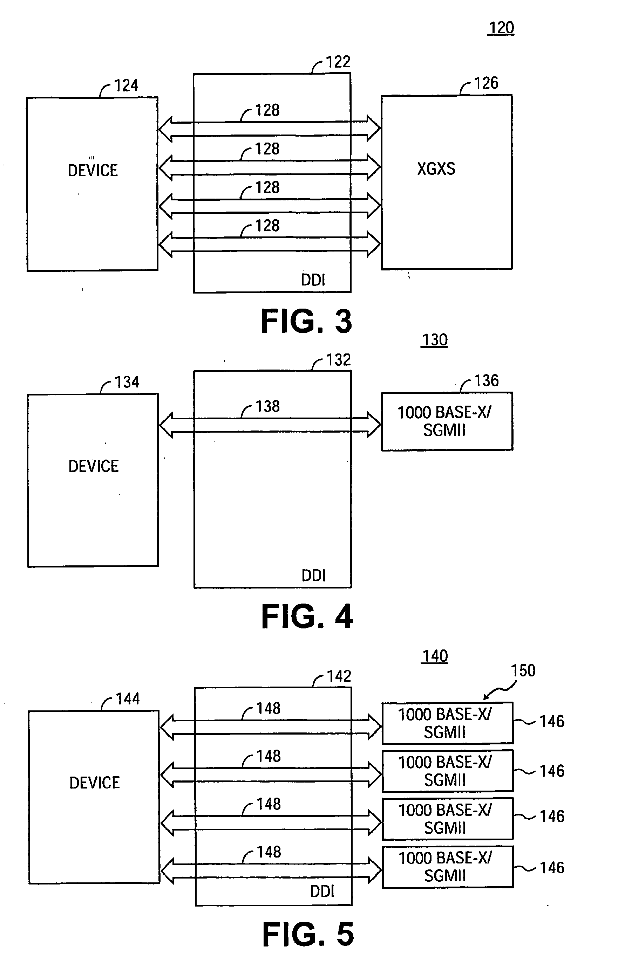

Figures 3 through 5 schematic diagrams illustrating devices capable of negotiating a mode of data transmission in data lanes of a DDI according to alternative embodiments of the present invention illustrated in Figures 1 and 2. A system 120 shown in Figure 2 comprises devices 124 and 126 coupled by data lanes 128 in a DDI 122. In the presently illustrated embodiment, either or both of the devices 124 and 126 may be capable of being configured to communicate according to one or more data transmission modes. For example, the devices 124 and 126 may each comprise one or more combinations of a PMA and PCS sections including a combination of a PMA and PCS sections to operate as a Ten Gigabit Media Independent Interface Extender Sublayer (XGXS) device according to IEEE Std. 802.3ae-2002, Clause 47. Accordingly, the DDI 122 may comprise a Ten Gigabit Attachment Unit Interface (XAUI) coupling devices 124 and 126 as XGXS devices. It should be understood, however, that either of the devices may also have a combination of a PMA and PCS section to enable a 1000BASE-X data transmission mode according to IEEE Std. 802.3 - 2000, clause 36 (where each PMA attaches to a transmit differential signaling pair and a receive differential signaling pair), a Serial Gigabit Media Independent Interface (SGMII) data transmission mode according to a SGMII signaling format proposed by Cisco Systems, Inc., or other data transmission mode.

During a negotiation period as outlined above with reference to Figure 2, data transmission as XGXS devices over a XAUI may be selected as the "highest common denominator" data transmission mode between the devices 124 and 126 as indicated in Next Page Messages. As such, PMA and PCS sections of the devices 124 and 126 may be capable of this selected data transmission mode. Accordingly, the devices 124 and 126 may be configured as XGXS devices communicating over a XAUI. Next Page Messages may also be used during a negotiation period to determine lane numbering on the XAUI between the devices 124 and 126.

Figure 4 shows a system 130 comprising devices 134 and 136 coupled by data lane 138 in a DDI 132 according to an embodiment. In the presently illustrated embodiment, the device 134 may be selectively configured to operate in any of a plurality of operating modes such as, for example, a XGXS operating mode to communicate as an XGXS device to another XGXS device over data lanes in a XAUI, a single port data transmission mode to communicate with a single port device over a single data lane. The device 136 may be selectively configured to operate in one or more single port data transmission modes to communicate with a single port device over a single data lane. Such a single port operating mode may include, for example, a 1000BASE-X data transmission mode according to IEEE Std. 802.3 - 2000, clause 36 or an SGMII data transmission mode according to the aforementioned SGMII signaling format proposed by Cisco Systems, Inc.

While device 136 may only be capable of operating as a single port device, the devices 134 and 136 may be configured for communicating in a common single port data transmission mode. If the devices 134 and 136 are capable of operating in more than one single port data transmission mode (e.g., each device is capable of operating in 1000BASE-X and SGMII data transmission modes), the devices 134 and 136 may be configured according to a "highest common denominator" data transmission mode selected according to an a priori prioritization scheme. PMA and PCS sections of the devices 134 and 136 associated with the selected single port data transmission mode may then be enabled to configure the devices to communicate according to the selected data transmission mode in the data lane 138.

Figure 5 shows a system 140 comprising a device 144 coupled to four devices 146 by data lanes 148 in a DDI 142 according to an embodiment. Each of the four devices 146 may comprise a single port device coupled to the device 144 by a corresponding data lane 148. In one embodiment, each of the four devices 146 may comprise an individual port integrated in a single multi-port device. In the presently illustrated embodiment, the device 144 may be selectively configured to operate in a plurality of data transmission modes such as, for example, a XGXS data transmission mode to communicate as an XGXS device to another XGXS device over data lanes forming a XAUI, or a single port data transmission mode (e.g., 1000BASE-X or SGMII) to communicate with one or more single port devices.

According to an embodiment, one of the devices 146 may comprise a negotiation section (not shown) which is coupled to the device 144 by a predetermined primary data lane 148 and is capable of configuring each device 146 to communicate according to a selected common data communication mode. For example, the negotiation section may enable PMA and PCS sections in each device 146 associated with the selected data communication mode.

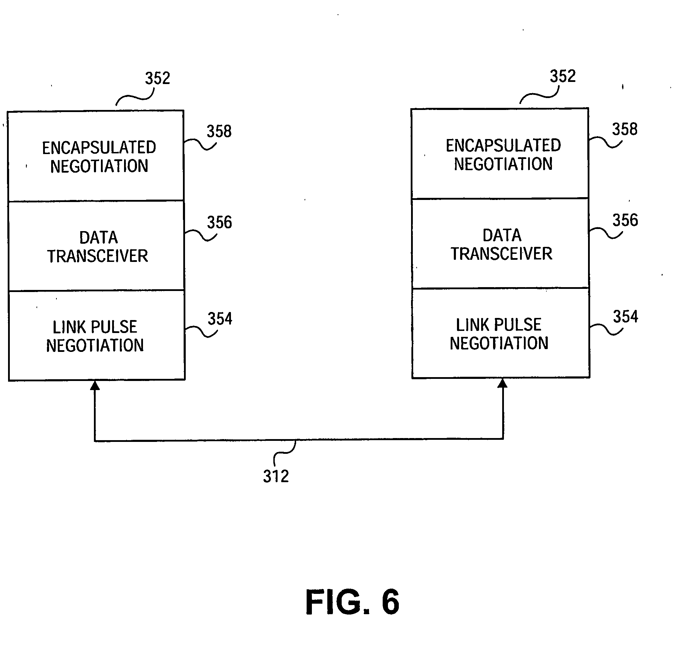

Figure 6 shows a schematic diagram of devices capable of encapsulated autonegotiation of an operational mode following negotiation of a data transmission mode in a DDI using link pulses according to an embodiment of the present invention as illustrated with reference to Figures 1 and 2. Devices 352 are coupled by one or more data lanes (not shown) in a DDI 312. Each device 352 comprises a link pulse negotiation section 354, data transceiver 356 and encapsulated negotiation section 358. The link pulse negotiation section 354 of each device 352 may select a data transmission mode from among one or more common data transmission modes (i.e., data transmission modes common to the data transceivers 356) and configure the data transceivers 356 to communicate in a selected common data transmission mode as shown in Figure 1. The selected data transmission mode may define an encapsulated negotiation process such as 1000BASE-X as provided in IEEE Std. 802.3 - 2000, clause 37. For example, during a negotiation period the link pulse negotiation sections 354 may enable PMA and PCS sections (not shown) in the data transceivers 356 to configure the data transceivers 356 to communicate in the selected data communication mode. Following the negotiation period, encapsulated negotiation sections 352 may identify additional capabilities (e.g., in a protocol layer defined above a PMA section) while communicating according to the selected data transmission mode. However, this is merely an example of how an encapsulated negotiation scheme may be executed following configuration of a data transceiver according to a selected data transmission mode and embodiments of the present invention are not limited in this respect.

While there has been illustrated and described what are presently considered to be example embodiments of the present invention, it will be understood by those skilled in the art that various other modifications may be made, and equivalents may be substituted, without departing from the true scope of the invention. Additionally, many modifications may be made to adapt a particular situation to the teachings of the present invention without departing from the central inventive concept described herein. Therefore, it is intended that the present invention not be limited to the particular embodiments disclosed, but that the invention include all embodiments falling within the scope of the appended claims.

## Claims

1. A method of negotiating a data transmission mode over a device-to-device interconnection, DDI, the DDI including data lanes in a common circuit board coupled to at least two devices and supporting a plurality of data transmission modes, the method comprising:
receiving (34) a link pulse signal in at least one of the devices, the link pulse signal being received on one or more data lanes of the DDI, the link pulse signal including at least one of a base link code word message or a next page message;
selecting (38) at least one data transmission mode based upon at least one of the base link code word message or the next page message of the received link pulse signal, wherein the at least one data transmission mode is selected from XAUI, and at least one of 1000BASE-X or SGMII; and
configuring (40) a data transceiver in at least one of the devices to transmit and receive data across the DDI according to the selected data transmission mode.

2. The method of claim 1, wherein the data transceiver further comprises a physical medium attachment, PMA, section and a physical coding sublayer, PCS, corresponding to each of the plurality of data transmission modes, and the method further comprises enabling the PMA and PCS sections associated with the selected data transmission mode.

3. The method of claim 1, the method further comprising transmitting a link pulse signal on at least one data lane of the DDI during the negotiation period to identify the one or more data transmission modes of the data transceiver.

4. The method of claim 1, wherein the data transceiver is adapted to be coupled to at least one differential pair corresponding to at least one of the data lanes.

5. The method of claim 4, wherein the DDI is formed in a printed circuit board comprising at least one pair of copper traces for each differential pair.

6. The method of claim 5, the method further comprising selectively configuring the data transceiver to transmit and receive data to a plurality of ports couple to the DDI in response to the link pulse signal.

7. An apparatus comprising:
means (20) for receiving a link pulse signal on one or more data lanes of a device-to-device interconnection, DDI (12;122;132;142), the link pulse signal including at least one of a base link code word message or a next page message, and wherein the DDI includes data lanes (128;138;148) in a common circuit board coupled to at least two devices (14,16; 124,126; 134,136; 144,146) and wherein the DDI supports a plurality of data transmission modes;
means (20) for selecting at least one data transmission mode based upon at least one of the base link code word message or the next page message of the received link pulse signal, wherein the at least one data transmission mode is selected from XAUI, and at least one of 1000BASE-X or SGMII; and
means (20) for configuring a data transceiver (18) in at least one of the devices to transmit and receive data on the DDI according to the selected data transmission mode.

8. The apparatus of claim 7, wherein the data transceiver further comprises a physical medium attachment, PMA, section and a physical coding sublayer, PCS, corresponding to each of the plurality of data transmission modes, and the apparatus comprises means for enabling the PMA and PCS sections associated with the selected data transmission mode.

9. The apparatus of claim 7, wherein apparatus further comprises means for transmitting a link pulse signal on at least one data lane of the DDI during a negotiation period to identify the one or more data transmission modes of the data transceiver.

10. The apparatus of claim 8, wherein the data transceiver is adapted to be coupled to at least one differential pair corresponding to at least one of the data lanes.

11. The apparatus of claim 10, wherein the DDI is formed in a printed circuit board comprising at least one pair of copper traces for each differential pair.

12. The apparatus of claim 11, the apparatus further comprising means for selectively configuring the data transceiver to transmit and receive data to a plurality of ports couple to the DDI in response to the link pulse signal.

13. A device in accordance with claim 7 comprising:
a data transceiver (18) adapted to be coupled to one or more data lanes of a device-to-device interconnection, DDI;
a negotiation section (20) comprising:
logic to receive at least one of a base link code word message or a next page message in a link pulse signal from at least one data lane of the DDI during a negotiation period;
logic to select a data transmission mode based upon at least one of the base link code word message or the next page message of the received link pulse signal, wherein the at least one data transmission mode is selected from XAUI, and at least one of 1000BASE-X or SGMII; and
configuration logic to selectively configure the data transceiver to transmit and receive data on the DDI according to the selected data transmission mode.

14. A system comprising:
a media access controller comprising a media independent interface MII; and
a communication device in accordance with claim 13, the data transceiver being coupled to the MII to transmit data between the MII and the DDI.

15. The system of claim 14, wherein the system further comprises a switch fabric coupled to the MAC.

16. The system of claim 14, wherein the system further comprises a packet classification device coupled to the MAC.

17. The system of claim 14, comprising:
a physical layer communication device to transmit data between the MII and a transmission medium.

18. The system of claim 17, wherein the physical layer communication device is adapted to transmit data between the MII and a fiber optic cable.

19. The system of claim 17, wherein the physical layer communication device is adapted to transmit data between the MII and a twisted wire pair cable.

20. A system comprising:
a physical layer communication device to transmit data between a transmission medium and a media independent interface, MII; and
a communication device in accordance with claim 13, the data transceiver being coupled to the MII to transmit data between the MII and the DDI;
wherein the negotiation section performs the selective configuration at the lowest layer in the physical layer device.

## Patentansprüche

1. Verfahren zur Verhandlung eines Datenübertragungsmodus über eine Gerät-zu-Gerät-Verbindung DDI, wobei die DDI Datenspuren in einer normalen Leiterplatte beinhaltet sind, die mit mindestens zwei Geräten gekoppelt ist und eine Vielzahl von Datenübertragungsmodi unterstützt, wobei das Verfahren umfasst:
Empfangen (34) eines Verbindungsimpulssignals in mindestens einem der Geräte, wobei das Verbindungsimpulssignal auf einer oder mehreren Datenspuren der DDI empfangen wird und das Verbindungsimpulssignal mindestens entweder eine Basis-Link-Codewortmeldung oder eine Nächste-Seite-Meldung beinhaltet;
Auswählen (38) von mindestens einem Datenübertragungsmodus basierend auf mindestens entweder der Basis-Link-Codewortmeldung oder der Nächste-Seite-Meldung des empfangenen Verbindungsimpulssignals, wobei der mindestens eine Datenübertragungsmodus aus XAUI und mindestens entweder 1000BASE-X oder SGMII ausgewählt wird; und
Konfigurieren (40) eines Datensendeempfängers in mindestens einem der Geräte, um Daten gemäß dem ausgewählten Datenübertragungsmodus über die DDI zu übertragen und zu empfangen.

2. Verfahren nach Anspruch 1, wobei der Datensendeempfänger ferner ein PMA (Physical Medium Attachment) umfasst, wobei der PMA-Bereich und eine PCS (Physical Coding Sublayer) jedem der Vielzahl von Datenübertragungsmodi entsprechen, und das Verfahren ferner das Aktivieren des zu dem ausgewählten Datenübertragungsmodus gehörenden PMA- und PCS-Bereiches umfasst.

3. Verfahren nach Anspruch 1, wobei das Verfahren ferner das Übertragen eines Verbindungsimpulssignals auf mindestens einer Datenspur der DDI während des Verhandlungszeitraums umfasst, um den einen oder die mehreren Datenübertragungsmodi des Datensendeempfängers zu identifizieren.

4. Verfahren nach Anspruch 1, wobei der Datensendeempfänger angepasst ist, um an mindestens ein Differentialpaar, das mindestens einer der Datenspuren entspricht, gekoppelt zu werden.

5. Verfahren nach Anspruch 4, wobei die DDI in einer Leiterplatte gebildet ist, die mindestens ein Paar Kupferspuren für jedes Differentialpaar umfasst.

6. Verfahren nach Anspruch 5, wobei das Verfahren ferner das selektive Konfigurieren des Datensendeempfängers umfasst, um Daten in Antwort auf das Verbindungsimpulssignal an einer Vielzahl von Port-Paaren an der DDI zu übertragen und zu empfangen.

7. Vorrichtung, umfassend:
Mittel (20) zum Empfangen eines Verbindungsimpulssignals auf einer oder mehreren Datenspuren einer Gerät-zu-Gerät-Verbindung, DDI (12;122;132;142), wobei das Verbindungsimpulssignal mindestens eine Basis-Link-Codewortmeldung oder eine Nächste-Seite-Meldung beinhaltet, und die DDI Datenspuren (128; 138; 148) in einer üblichen Leiterplatte beinhaltet, die mit mindestens zwei Geräten (14,16; 124,126; 134,136; 144,146) gekoppelt ist und wobei die DDI eine Vielzahl von Datenübertragungsmodi unterstützt;
Mittel (20) zum Auswählen von mindestens einem Datenübertragungsmodus basierend auf mindestens entweder der Basis-Link-Codewortmeldung oder der Nächste-Seite-Meldung des empfangenen Verbindungsimpulssignals, wobei der mindestens eine Datenübertragungsmodus aus XAUI und mindestens entweder 1000BASE-X oder SGMII ausgewählt wird; und
Mittel (20) zum Konfigurieren eines Datensendeempfängers (18) in mindestens einem der Geräte, um Daten gemäß dem ausgewählten Datenübertragungsmodus über die DDI zu übertragen und zu empfangen.

8. Vorrichtung nach Anspruch 7, wobei der Datensendeempfänger ferner einen PMA-Bereich (Physical Medium Attachment) und eine PCS (Physical Coding Sublayer) umfasst, die jedem der Vielzahl von Datenübertragungsmodi entsprechen, und die Vorrichtung Mittel zum Aktivieren des zu dem ausgewählten Datenübertragungsmodus gehörenden PMA- und PCS-Bereiches umfasst.

9. Vorrichtung nach Anspruch 7, wobei die Vorrichtung ferner Mittel zum Übertragen eines Verbindungsimpulssignals auf mindestens einer Datenspur der DDI während des Verhandlungszeitraums umfasst, um den einen oder die mehreren Datenübertragungsmodi des Datensendeempfängers zu identifizieren.

10. Vorrichtung nach Anspruch 8, wobei der Datensendeempfänger angepasst ist, um an mindestens ein Differentialpaar gekoppelt zu werden, das mindestens einer der Datenspuren entspricht.

11. Vorrichtung nach Anspruch 10, wobei die DDI in einer Leiterplatte gebildet ist, die mindestens ein Paar Kupferspuren für jedes Differentialpaar umfasst.

12. Vorrichtung nach Anspruch 11, wobei das Verfahren ferner Mittel zum selektiven Konfigurieren des Datensendeempfängers umfasst, um Daten in Antwort auf das Verbindungsimpulssignal an einer Vielzahl von Port-Paaren an der DDI zu übertragen und zu empfangen.

13. Vorrichtung nach Anspruch 7, umfassend:
einen Datensendeempfänger (18), der angepasst ist, um mit einer oder mehreren Datenspuren einer Gerät-zu-Gerät-Verbindung DDI gekoppelt zu werden;
einen Verhandlungsbereich (20), umfassend:
Logik, um mindestens entweder eine Basis-Link-Codewortmeldung oder eine Nächste-Seiten-Meldung in einem Verbindungsimpulssignal von mindestens einer Datenspur der DDI während eines Verhandlungszeitraums zu empfangen;
Logik, um einen Datenübertragungsmodus basierend auf mindestens entweder der Basis-Link-Codewortmeldung oder der Nächste-Seite-Meldung des empfangenen Verbindungsimpulssignals auszuwählen, wobei der mindestens eine Datenübertragungsmodus aus XAUI und mindestens entweder 1000BASE-X oder SGMII ausgewählt wird; und
Konfigurierungslogik, um selektiv den Datensendeempfänger zu konfigurieren, um Daten gemäß dem ausgewählten Datenübertragungsmodus über die DDI zu übertragen und zu empfangen.

14. System, umfassend:
eine MAC (Media Access Controller), die eine medienunabhängige Schnittstelle MII umfasst; und
ein Kommunikationsgerät nach Anspruch 13, wobei der Datensendeempfänger an die MII gekoppelt ist, um Daten zwischen der MII und der DDI zu übertragen.

15. System nach Anspruch 14, wobei das System ferner eine Switching-Fabric umfasst, die an die MAC gekoppelt ist.

16. System nach Anspruch 14, wobei das System ferner ein Paketklassifizierungsgerät umfasst, das an die MAC gekoppelt ist.

17. System nach Anspruch 14, umfassend:
ein Gerät zur Kommunikation der physikalischen Schicht, um Daten zwischen der MII und einem Übertragungsmedium zu übertragen.

18. System nach Anspruch 17, wobei das Gerät zur Kommunikation der physikalischen Schicht angepasst ist, um Daten zwischen der MII und einem Faseroptikkabel zu übertragen.

19. System nach Anspruch 17, wobei das Gerät zur Kommunikation der physikalischen Schicht angepasst ist, um Daten zwischen der MII und einem verdrillten Kabelpaar zu übertragen.

20. System, umfassend:
ein Gerät zur Kommunikation der physikalischen Schicht, um Daten zwischen einem Übertragungsmedium und einer medienunabhängigen Schnittstelle MII zu übertragen; und
ein Kommunikationsgerät nach Anspruch 13, wobei der Datensendeempfänger an die MII gekoppelt ist, um Daten zwischen der MII und der DDI zu übertragen;
wobei der Verhandlungsbereich die selektive Konfiguration in der untersten Schicht in dem Gerät der physikalischen Schicht durchführt.

## Revendications

1. Procédé de négociation d'un mode de transmission de données concernant une interconnexion DDI de dispositif à dispositif, la DDI comprenant des voies de données sur une carte de circuit commune couplée à au moins deux dispositifs et permettant plusieurs modes de transmission de données, le procédé comprenant des étapes consistant à :
recevoir (34) un signal impulsionnel de liaison dans au moins un des dispositifs, le signal impulsionnel de liaison étant reçu sur une ou plusieurs voies de données de la DDI, le signal impulsionnel de liaison contenant un message de mots de code de liaison de base et/ou un message d'appel suivant ;
sélectionner (38) au moins un mode de transmission de données reposant sur le message de mots de code de liaison de base et/ou le message d'appel suivant du signal impulsionnel de liaison reçu, ledit au moins un mode de transmission de données étant choisi parmi XAUI et l'un au moins des modes 1000BASE-X et SGMII ; et
configurer (40) un émetteur-récepteur de données dans au moins un des dispositifs pour émettre et recevoir des données via la DDI en fonction du mode de transmission de données sélectionné.

2. Procédé selon la revendication 1, dans lequel l'émetteur-récepteur de données comprend en outre une section de raccordement à un support physique, PMA, et une sous-couche physique de codage, PCS, correspondant à chacun des desdits plusieurs modes de transmission de données, et le procédé comprend en outre la mise en service des sections PMA et PCS associées au mode de transmission de données sélectionné.

3. Procédé selon la revendication 1, le procédé comprenant en outre l'émission d'un signal impulsionnel de liaison sur au moins une voie de données de la DDI pendant la période de négociation afin d'identifier un ou plusieurs modes de transmission de données de l'émetteur-récepteur de données.

4. Procédé selon la revendication 1, dans lequel l'émetteur-récepteur de données est apte à être couplé à au moins une paire différentielle correspondant à au moins une des voies de données.

5. Procédé selon la revendication 4, dans lequel la DDI est formée sur une carte de circuit imprimé comportant au moins une paire de pistes de cuivre pour chaque paire différentielle.

6. Procédé selon la revendication 5, le procédé comprenant en outre une étape de configuration sélective de l'émetteur-récepteur de données pour émettre et recevoir, en réponse au signal impulsionnel de liaison, des données vers/de plusieurs ports couplés à la DDI.

7. Dispositif, comprenant :
un moyen (20) pour recevoir un signal impulsionnel de liaison sur une ou plusieurs voies de données d'une interconnexion DDI (12 ; 122 ; 132 ; 142) de dispositif à dispositif, le signal impulsionnel de liaison contenant un message de mots de code de liaison de base et/ou un mot d'appel suivant, et dans lequel la DDI comprend des voies de données (128 ; 138 ; 148) sur une carte de circuit commune couplée à au moins deux dispositifs (14, 16 ; 124, 126 ; 134, 136 ; 144, 146) et dans lequel la DDI permet plusieurs modes de transmission de données ;
un moyen (20) pour sélectionner au moins un mode de transmission de données d'après le message de mots de code de liaison de base et/ou le message d'appel suivant du signal impulsionnel de liaison reçu, ledit au moins un mode de transmission de données étant sélectionné parmi XAUI et au moins un des modes 1000BASE-X et SGMII ; et
un moyen (20) pour configurer un émetteur-récepteur (18) de données dans au moins un des dispositifs pour émettre et recevoir des données sur la DDI suivant le mode de transmission de données choisi.

8. Dispositif selon la revendication 7, dans lequel l'émetteur-récepteur de données comprend en outre une section de raccordement à un support physique, PMA, et une sous-couche physique de codage, PCS, correspondant à chacun des desdits plusieurs modes de transmission de données, et le dispositif comprend un moyen pour mettre en service les sections PMA et PCS associées au mode de transmission de données sélectionné.

9. Dispositif selon la revendication 7, comprenant en outre un moyen pour émettre un signal impulsionnel de liaison sur au moins une voie de données de la DDI pendant une période de négociation afin d'identifier le ou les modes de transmission de données de l'émetteur-récepteur de données.

10. Dispositif selon la revendication 8, dans lequel l'émetteur-récepteur de données est apte à être couplé à au moins une paire différentielle correspondant à au moins une des voies de données.

11. Dispositif selon la revendication 10, dans lequel la DDI est formée sur une carte de circuit imprimé comportant au moins une paire de pistes de cuivre pour chaque paire différentielle.

12. Dispositif selon la revendication 11, comprenant en outre un moyen pour configurer de manière sélective l'émetteur-récepteur de données afin d'émettre et de recevoir, en réponse au signal impulsionnel de liaison, des données vers/de plusieurs ports couplés à la DDI.

13. Dispositif selon la revendication 7, comprenant :
un émetteur-récepteur (18) de données apte à être couplé à une ou plusieurs voies de données d'une interconnexion DDI de dispositif à dispositif ;
une section de négociation (20) comprenant :
une logique pour recevoir d'au moins une voie de données de la DDI, pendant une période de négociation, un message de mots de code de liaison de base et/ou un message d'appel suivant dans un signal impulsionnel de liaison ;
une logique pour sélectionner un mode de transmission de données d'après le message de mots de code de liaison de base et/ou le message d'appel suivant du signal impulsionnel de liaison reçu, ledit au moins mode de transmission de données étant sélectionné par XAUI et au moins des desdits modes 1000BASE-X ou SGMII ; et
une logique de configuration pour configurer d'une manière sélective l'émetteur-récepteur de données afin d'émettre et de recevoir des données sur la DDI suivant le mode de transmission de données sélectionné.

14. Système comprenant :
un contrôleur MAC d'accès au support comportant une interface MII indépendante du support ; et
un dispositif de communication selon la revendication 13, l'émetteur-récepteur de données étant couplé à la MII pour transmettre des données entre la MII et la DDI.

15. Système selon la revendication 14, comprenant en outre une matrice de commutation couplée au MAC

16. Système selon la revendication 14, comprenant en outre un dispositif de classification de paquets couplé au MAC.

17. Système selon la revendication 14, comprenant :
un dispositif de communication à couches physiques pour transmettre des données entre la MII et un support de transmission.

18. Système selon la revendication 17, dans lequel le dispositif de communication à couches physiques est apte à transmettre des données entre la MII et un câble optique à fibre.

19. Système selon la revendication 17, dans lequel le dispositif de communication à couches physiques est apte à transmettre des données entre la MII et un câble à paire torsadée.

20. Système comprenant :
un dispositif de communication à couches physique afin de transmettre des données entre un support de transmission et une interface MII indépendante du support ; et
un dispositif de communication selon la revendication 13, l'émetteur-récepteur de données étant couplé à la MII pour transmettre des données entre la MII et la DDI ;
la section de négociation exécutant la configuration sélective au niveau de la couche inférieure du dispositif à couches physiques.
